# EUROPEAN PATENT APPLICATION

(11) **EP 4 549 603 A1**
(43) Date of publication of application: **07.05.2025**
(21) Application number: 24211155.7
(22) Date of filing: 06.11.2024
(51) Int. Cl.: C22B 9/00, B22D 1/00, C22B 9/02, C22B 9/05, C22B 21/06, C22C 1/02, C22B 1/00, C22C 21/02

(54) **A METHOD FOR PRODUCING CASTING SECONDARY ALUMINUM ALLOYS**

(30) Priority: 06.11.2023 PL 44665223
(71) Applicant: Przedsiebiorstwo Metali Niezelaznych "BOBREK" Spolka Jawna Dawid i Pawel Kleszcz, Bronislaw Kozbial, 32-661 Bobrek (PL)
(72) Inventor: WEZYK, Wladyslaw, 30-395 Krakow (PL)
(74) Representative: Kancelaria Eupatent.pl Sp. z.o.o

(57) **Abstract**

A method for producing secondary aluminum alloys, comprising the steps of: melting (101) aluminum scrap to obtain a liquid metal; performing flow refining (102) of the liquid metal using inert gases; and filtering (103) the liquid metal through a ceramic foam filter; characterized by: conducting the flow refining (102) within a flow refining chamber (200) divided by a ceramic baffle (201) into two sections (202, 203), wherein an opening (204) beneath the ceramic baffle (201) facilitates the flow of liquid metal from the first section (202) to the second section (203); introducing an inert gas into the liquid metal in the first section (202) via a first rotating nozzle (205) terminating in a first rotor (215), wherein the bubbles formed elevate impurities to the surface of the liquid metal; introducing an inert gas into the liquid metal in the second section (203) via a second rotating nozzle (206) terminating in a second rotor (216), wherein the bubbles formed elevate hydrogen bubbles from the liquid metal to its surface; wherein the filtering (103) is performed in a filter chamber (300) equipped with at least one vibrator (301) attached to the housing (302) of the filter chamber (300), the vibrator being adapted to induce vibrations in the filter chamber (300) to evenly distribute the liquid metal; and wherein the ceramic foam filter (400) is a multilayer filter, having a lowest density layer (401) positioned closest to the inlet (303) of the filter chamber (300), and a highest density layer (403) positioned closest to the outlet (304) of the filter chamber (300).

## Description

### TECHNICAL FIELD

The invention pertains to the field of metallurgy, specifically focusing on a method for producing casting secondary aluminum alloys. This method enables the creation of high-purity alloys from scrap metal through a recycling process.

### BACKGROUND

Aluminum alloys are widely recognized and extensively used in casting processes. There are two primary types of aluminum alloys: primary alloys, derived from primary aluminum, and secondary alloys, produced by recycling aluminum scrap and production waste. Primary aluminum is obtained by processing aluminum ore (bauxite) to extract aluminum oxide, which is then converted into pure (99.97%) primary aluminum through electrolysis.

Producing primary alloys requires significantly more energy, approximately 90% more than secondary alloys. However, aluminum is one of the few metals that can be almost entirely reused in a closed-loop economy, impacting the cost of secondary aluminum alloys. These alloys are commonly used in the automotive industry, construction, and household appliances. Nevertheless, they have limitations due to the presence of micropollutants, solid inclusions such as oxides, carbides, nitrides, borides, spinels, and gaseous impurities. These impurities, by-products of the recycling process, affect the mechanical properties of secondary alloys, such as tensile strength and elongation, and can cause microcracks in finished castings. Consequently, secondary alloys are not fully utilized in the automotive industry for safety-related components, such as wheels, steering systems, controlled deformation system elements, body structure castings, or brake systems, which are instead made from more expensive primary alloys.

To enhance the quality of secondary aluminum alloys, various liquid metal treatment processes have been employed, primarily involving refining salts and gas refining devices, and less frequently, filtration processes using ceramic filters. The salts used in treating liquid aluminum alloys are mainly compounds of chlorine, fluorine, potassium, and sodium. They generate a refining gas stream and cause an exothermic reaction on the liquid metal surface, primarily to remove hydrogen. Inert gases, usually nitrogen or argon, are dispersed in fine bubbles throughout the liquid metal, removing hydrogen through diffusion and interaction. The exothermic reaction reduces the amount of liquid metal in the dross on the bath surface. A major disadvantage of these processes is the hazardous waste produced, such as dross contaminated with chlorine, fluorine, potassium, and sodium compounds.

An alternative method is the gas refining process using rotary nozzles, which introduce inert gas into the liquid metal. This process uses diffusion, with the inert gas introduced by a rotating nozzle. The gas refining process also involves flotation, where fine inclusions adhere to inert gas bubbles and accumulate in the dross. However, rotary nozzles are typically optimized for degassing, leaving room for improvement in the flotation process.

Filtration is another method to improve the quality of liquid secondary alloys, using filtration fabrics or foam ceramic filters. Foam filters, made from ceramic materials, have a network of channels and pores, forming a three-dimensional labyrinth. Unlike ordinary filters, ceramic filters retain impurities within their structure. The effectiveness of these filters depends on their density, measured in pores per square inch (PPI). Low-density filters (10-20 PPI) are used to retain dross and oxides but are less effective for fine impurities. High-density filters (40-50 PPI) can accumulate dross on their surface, reducing efficiency and potentially blocking the filtration chamber.

### SUMMARY OF THE INVENTION

The inventors have developed an innovative method for producing secondary aluminum alloys to achieve high purity, comparable to primary alloys, allowing their use in new applications. The invention involves a refining stage using a flow refining device with two rotary nozzles ending in rotors, where the chamber of the refining device is divided into two sections. In the first section, a rotor optimized for effectively conducting the flotation process of solid impurities is used, while in the second section of the chamber, a rotor with a design allowing optimal removal of gaseous impurities from the liquid metal is used. Additionally, the filtering stage is conducted using a vibrating filtration chamber with a three-layer ceramic filter of graded density (10-50 PPI). This method produces high-purity secondary aluminum alloys with mechanical properties similar to primary alloys, expanding their potential applications to areas previously reserved for primary aluminum.

In one aspect of the invention, a method for producing casting secondary aluminum alloys is disclosed. This method involves melting aluminum scrap to obtain liquid metal, performing flow refining using inert gases, and filtering the liquid metal through a ceramic foam filter. The flow refining is conducted within a chamber divided into two sections by a ceramic baffle, allowing the liquid metal to flow from the first to the second section. Inert gas is introduced in both sections via rotating nozzles, with the first nozzle elevating impurities and the second nozzle elevating hydrogen bubbles to the surface. The filtering is performed in a chamber equipped with a vibrator to ensure even distribution of the liquid metal, using a multilayer ceramic foam filter with varying densities. This allows for the production of high-purity secondary aluminum alloys with mechanical properties similar to primary alloys, thus expanding their potential applications.

In a preferred embodiment of the invention, the inert gas used in the flow refining process is selected from nitrogen, argon, or a mixture thereof. This choice of inert gas provides the technical advantage of effectively removing impurities and hydrogen without introducing additional contaminants, thereby enhancing the purity of the resulting aluminum alloy.

In another preferred embodiment, the first rotating nozzle introduces 17 to 23 liters per minute of inert gas at a pressure of 0.8 to 1.0 atm, with the rotor rotating at a speed of 380 to 400 rpm. This configuration optimizes the flotation of solid impurities, providing the advantage of achieving a low impurity content in the liquid metal.

In yet another preferred embodiment, the second rotating nozzle introduces 20 to 40 liters per minute of inert gas at a pressure of 1.5 to 2.0 atm, with the rotor rotating at a speed of 480 to 800 rpm. This setup is optimized for degassing, offering the advantage of reducing hydrogen content to industry standards, thus improving the alloy's mechanical properties.

In a further preferred embodiment, the multilayer ceramic foam filter comprises three layers. This multilayer structure provides the advantage of maximizing contaminant filtration while minimizing the risk of clogging, ensuring a consistent flow of high-purity liquid metal.

In an additional preferred embodiment, the first layer of the multilayer ceramic foam filter has a density of 5-20 pores per inch (ppi), the second layer has a density of 21-40 ppi, and the third layer has a density of 41-60 ppi. This gradation in filter density allows for effective removal of various impurity sizes, providing the advantage of achieving exceptionally low impurity levels in the final aluminum alloy.

These and other features, aspects and advantages of the invention will become better understood with reference to the following drawings, descriptions, and claims.

### BRIEF DESCRIPTION OF DRAWINGS

The invention is illustrated by example embodiments in the drawings, wherein:
Fig. 1 shows stages of a method of producing casting secondary aluminum alloys according to the invention;

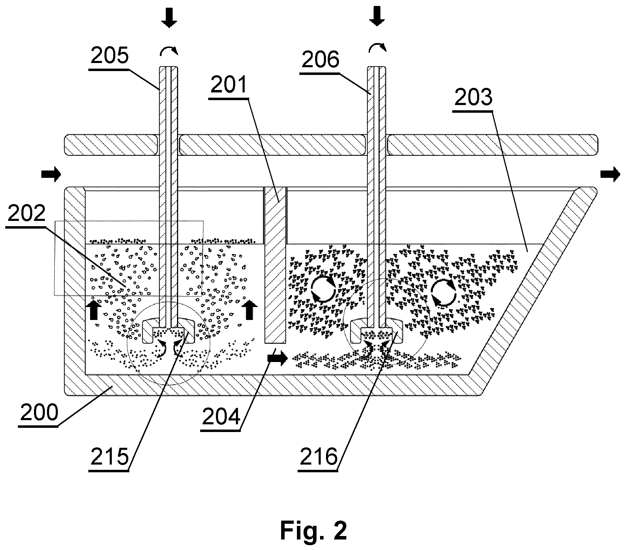

Fig. 2 shows an embodiment of a flow refining chamber;
Fig. 3 shows an embodiment of a rotor for optimizing impurity flotation;
Fig. 4 shows an embodiment of a rotor for optimizing degassing of liquid metal;

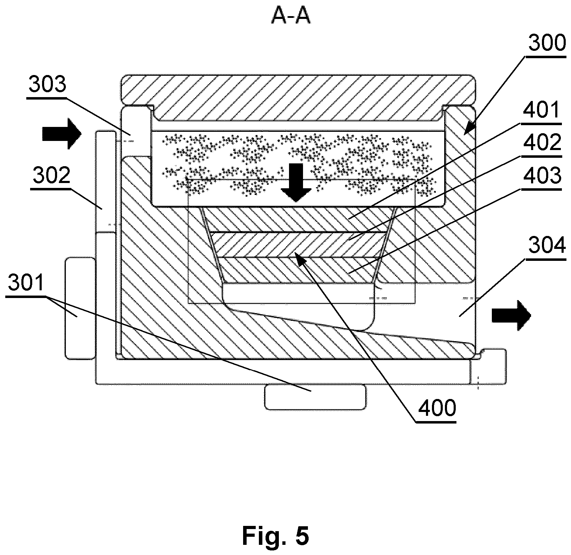

Fig. 5 shows an embodiment of a filtration chamber.

### DETAILED DESCRIPTION OF EMBODIMENTS

The following detailed description is of the best currently contemplated modes of carrying out the invention. The description is not to be taken in a limiting sense but is made merely for the purpose of illustrating the general principles of the invention.

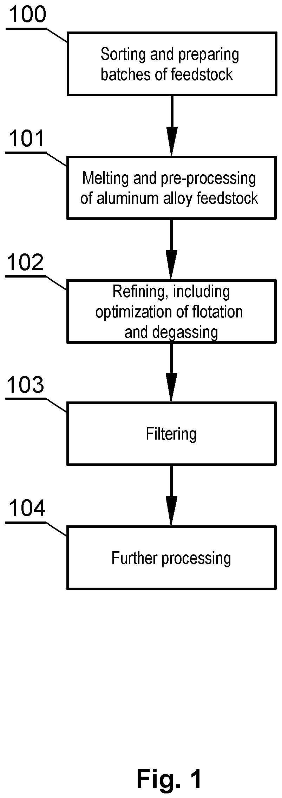

Fig. 1 illustrates the method for producing secondary aluminum casting alloys according to the invention. In step 100, the process involves sorting and preparing batches of feedstock, which includes scrap and waste from aluminum and its alloys, for the melting process. The production of secondary aluminum alloys is integral to a closed-loop economy, primarily focusing on recycling scrap and waste materials generated both after the useful life of aluminum alloy components and during their production. An important aspect of this process is the sorting of waste, which involves pre-cleaning to remove contamination from other light metal species such as magnesium or zinc alloys, as well as iron alloys. Subsequently, aluminum alloy elements are categorized into cast products and those obtained through plastic processing, such as profiles, sheets, and forgings. These sorted materials serve as input for the melting process, with their contribution to secondary aluminum alloy production depending on the specific alloy grades being produced.

In step 101, the sorted aluminum alloy feedstock materials are melted in melting furnaces. The resultant liquid metal is collected in the melting furnace bath, where samples are taken for chemical composition analysis using spark spectrometers. Based on the analysis results, adjustments to the chemical composition are made by introducing appropriate alloying additives into the liquid metal within the bath furnace. Additionally, this analysis informs the selection of scrap metal compositions with varying chemical properties for the melting process. The outcome of this step is the production of a new secondary aluminum alloy with a specified chemical composition, ready for further processing.

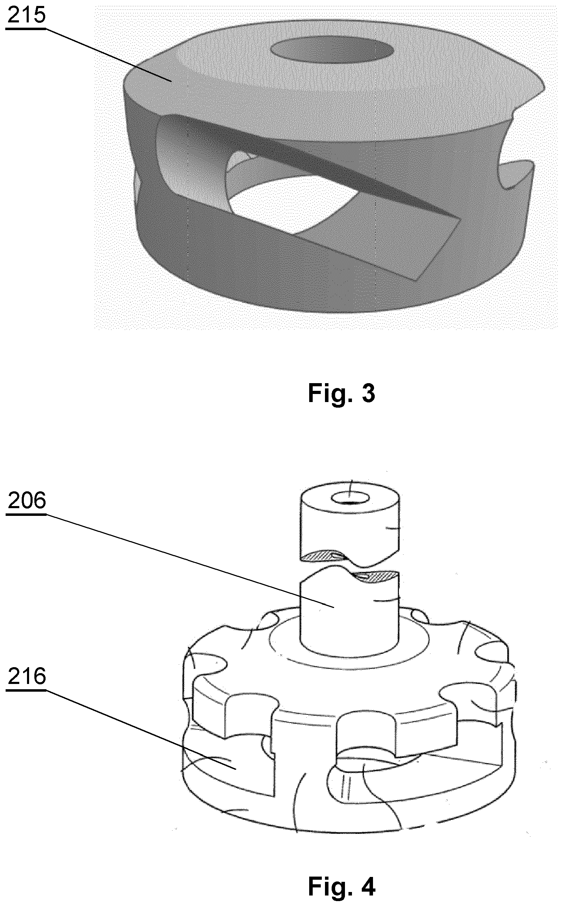

In step 102, the finished liquid alloy undergoes a continuous refining process within a refining chamber 200 designed for flow refining. The liquid metal from the bath furnace is transferred via a conveying trough to the refining chamber 200, which is divided into two sections, 202 and 203. In both sections, rotating nozzles 205 and 206 are submerged in the flowing liquid metal, supplying inert gas (nitrogen, argon, or a mixture thereof) through a shaft to rotors 215 and 216 mounted at the shaft's lower end. The refining chamber 200 has a capacity ranging from 1 to 2 tons. Once the chamber 200 is initially filled, the refining process commences. The division into two sections allows for the use of two different rotor types. In the first section 202, solid flotation occurs, facilitated by the first flotation nozzle 205, which rotates at 380-400 rpm, introducing inert gas (nitrogen, argon, or their mixture) into the liquid metal at a rate of 17-23 l/min and a pressure of 0.8-1.0 atm. An example of the first rotor 215 mounted at the end of the first flotation nozzle 205, shown in Fig. 3, features a ring shape with elongated, oblique through holes in the side wall. The first rotor 215 is designed to direct a stream of inert gas towards the liquid metal's surface, utilizing the phenomenon of contaminant adhesion on the gas bubbles' surface, allowing contaminants to rise with the bubbles to the surface. This effectively removes solid inclusions such as oxides, carbides, nitrides, borides, or spinels from the liquid metal flowing through the first section 202 of the refining chamber 200. The impurities float to the surface of the liquid metal, from where they can be easily removed. The process aims to achieve a liquid metal with a solid impurity content of less than 0.2 mm²/kg, preferably less than 0.1 mm²/kg, and most preferably less than 0.05 mm²/kg.

The liquid metal flows from the first section 202 of the refining chamber 200 to the second section 203 of the refining chamber 200, passing under a baffle 201 forming a siphon. The second section 203 of the refining chamber 200 serves as a degassing chamber, where a second flotation nozzle 206 with a rotor 216 optimized for bath degassing is submerged. An exemplary shape of the second rotor 216 is shown in Fig. 4, featuring a ring shape with elongated horizontal through-holes in the side wall and an uneven upper outer edge, through which inert gas (nitrogen, argon, or a mixture thereof) is introduced into the liquid melt. Other rotor shapes known from prior art can also be employed, characterized by an elaborate shape with various folded side edges, designed to intensively mix the inert gas with the metal bath. This multidirectional mixing causes a large dispersion of inert gas bubbles in the liquid metal. Most rotating nozzles 206 of this type require a high rotational speed of 500-800 rpm and an inert gas flow rate of 20-40 l/min at a pressure of 1.5-2.0 atm. The second rotor 216 should be shaped to introduce inert gas bubbles toward the chamber's bottom. The inert gas introduced into the liquid metal is broken up by the second rotating nozzle 206 into fine bubbles, which, based on the principle of the diffusion process, combine with hydrogen bubbles present in liquid aluminum. The liquid metal becomes repeatedly saturated with bubbles, as the already saturated metal is returned to the rotor. The bubbles with the gas mixture float to the surface, removing hydrogen from the bath. The process aims to achieve a final hydrogen concentration in the bath of less than 0.1 cm³/100g, preferably less than 0.05 cm³/100g, and most preferably less than 0.042 cm³/100g.

In step 103, the liquid metal undergoes a filtration process, flowing through a filter chamber 300 equipped with a three-layer ceramic foam filter 400. At least one electrovibrator 301, preferably two, is mounted on the housing 302 of the filter chamber 300. These electrovibrators 301 generate low amplitude and high frequency vibrations, ensuring uniform distribution of the metal in the filter chamber 300 and across the filter's transverse section. The filter comprises several layers, preferably three 401, 402, 403, with varying densities. Preferably, the layers closer to the inlet 303 of the filter chamber 300 have a lower density than those further away, such as 10 ppi, 30 ppi, and 50 ppi from the inlet 303. The individual layers of the filter 400 are preferably ceramic foam filters. This structure allows for maximum contaminant filtration while reducing the risk of clogging, which often occurs with a single high-density filter, such as 50 ppi. The process results in a liquid metal with an impurity content of less than 0.02 mm²/kg, preferably less than 0.015 mm²/kg, and most preferably less than 0.012 mm²/kg.

In step 104, the casting secondary aluminum alloy obtained through the described purification methods can be used for producing aluminum castings in demanding automotive industry areas. The obtained aluminum alloy can also be used in further production processes as ingots or liquid metal.

### Example embodiment of the method

Step 100 involves sorting and preparing batches of feedstock, comprising scrap and waste from aluminum and its alloys, for melting. Only aluminum scrap free from magnesium and zinc contamination is selected for further processing stages. In step 101, the batch of aluminum scrap intended for recycling is melted and prepared for subsequent processing. As part of quality control, an analysis of the alloy composition is conducted to confirm that the selected scrap composition allows for obtaining an aluminum alloy with the desired properties.

The liquid metal is introduced via a transport trough from the bath furnace to the refining chamber 200, which is configured for flow refining. The liquid metal is directed to the first section 202 of the chamber, where nitrogen is introduced into the bath using the first rotor 205, optimized for impurity flotation, at a volume of 20 liters per minute and a pressure of 0.9 atm. The rotor rotates at a speed of 390 rpm. This action lifts impurities, such as oxides, carbides, nitrides, borides, or spinels, to the surface of the bath, preventing them from passing to the next processing stage.

From the first section 202 of the chamber, the liquid metal flows under the ceramic baffle 201, dividing the flow refining chamber 200, to the second section 203 of the chamber. In the second section 203, nitrogen at a volume of 30 liters per minute and a pressure of 1.5 atm is introduced into the bath using the second rotor 206, optimized for degassing. The rotor 206 rotates at a speed of 700 rpm and is a FOSECO FDU XSR OX 190 type rotor. This process removes excess hydrogen, which adversely affects the alloy's properties, from the bath.

The liquid metal, after exiting the second section of the chamber 203, is directed to the filter chamber 300, where the filtering process is conducted in step 103. The filter chamber 300 consists of a steel housing 302 reinforced with steel profiles. Two electrovibrators 301 are mounted on the outside of the filter chamber on its side walls. They generate low amplitude and high frequency vibrations in the liquid metal filling the filter chamber 300 to prevent blocking the flow of liquid metal. The entire structure of the chamber 300 is set on four spring vibration dampers, which are mounted to the supporting frame (base) of the filter chamber 300. The filter chamber 300 has a steel cover filled with insulating concrete on the chamber side. The interior of the filter chamber consists of an insulating layer made of ceramic materials and a working lining made of refractory concrete. Inside the lining, there is a formed socket, which has the shape of a truncated pyramid turned with its base upwards in the filter chamber 300. A ceramic foam filter 400 is placed in the socket. The filter used in this case is a ceramic foam filter consisting of three filtering layers 401, 402, 403. The filtering layers are arranged such that the layer with the lowest density 401 is closest to the inlet 303 of the filter chamber, and the layer with the highest density 403 is closest to the outlet 304 of the filter chamber. The layers have densities of 10 ppi 401, 30 ppi 402, and 50 ppi 403, respectively. Thanks to this arrangement, the filter is not clogged with accumulating impurities, and the flow rate of the liquid metal through the filter is limited by the production line speed, amounting to 4.5 tons per hour.

In step 104, the liquid metal leaving the filter chamber 300 is subjected to further casting processes of AlSi7MgO3 alloy ingots, intended for the production of car rims. Due to its favorable mechanical properties, bodywork elements are made from it.

In summary, as a result of the process described above, a high-purity secondary aluminum alloy is obtained from aluminum scrap. The total content of solid impurities, tested using the PREFIL apparatus and metallographic examinations combined with image analysis, is at a level of less than 0.020 mm²/kg, specifically:
- the content of carbides in the form of Al₄C₃ is below 0.007 mm²/kg ,
- the content of oxides and spinels MgO, MgAl₂O₄ is below 0.01 mm²/kg ,
- the content of inclusions from ceramic lining materials, i.e., Al₂O₃, CaO, SiO₂, is below 0.007 mm²/kg.

The hydrogen content is in the range of 0.035-0.043 cm³/100g. This indicates that the obtained secondary aluminum alloy meets the automotive industry standards for casting aluminum alloys intended for the production of safety elements and body structure components. The hydrogen content in the alloy, which does not exceed 0.1 cm³/100g, is also achieved, allowing it to be considered low according to industry standards. Obtaining secondary aluminum alloys with such high-quality parameters was not previously possible.

## Claims

1. A method for producing secondary aluminum alloys, comprising the steps of:
- melting (101) aluminum scrap to obtain a liquid metal;
- performing flow refining (102) of the liquid metal using inert gases; and
- filtering (103) the liquid metal through a ceramic foam filter;
**characterized by**:
- conducting the flow refining (102) within a flow refining chamber (200) divided by a ceramic baffle (201) into two sections (202, 203), wherein an opening (204) beneath the ceramic baffle (201) facilitates the flow of liquid metal from the first section (202) to the second section (203);
- introducing an inert gas into the liquid metal in the first section (202) via a first rotating nozzle (205) terminating in a first rotor (215), wherein the bubbles formed elevate impurities to the surface of the liquid metal;
- introducing an inert gas into the liquid metal in the second section (203) via a second rotating nozzle (206) terminating in a second rotor (216), wherein the bubbles formed elevate hydrogen bubbles from the liquid metal to its surface;
- wherein the filtering (103) is performed in a filter chamber (300) equipped with at least one vibrator (301) attached to the housing (302) of the filter chamber (300), the vibrator being adapted to induce vibrations in the filter chamber (300) to evenly distribute the liquid metal; and
- wherein the ceramic foam filter (400) is a multilayer filter, having a lowest density layer (401) positioned closest to the inlet (303) of the filter chamber (300), and a highest density layer (403) positioned closest to the outlet (304) of the filter chamber (300).

2. The method according to claim 1, wherein the inert gas used in the flow refining process is selected from the group consisting of nitrogen, argon, or a mixture thereof.

3. The method according to any of the preceding claims, wherein the first rotating nozzle (205) introduces 17 to 23 liters per minute of inert gas at a pressure of 0.8 to 1.0 atm, with the first rotor (215) rotating at a speed of 380 to 400 rpm.

4. The method according to any of the preceding claims, wherein the second rotating nozzle (206) introduces 20 to 40 liters per minute of inert gas at a pressure of 1.5 to 2.0 atm, with the second rotor (216) rotating at a speed of 480 to 800 rpm.

5. The method according to any of the preceding claims, wherein the multilayer ceramic foam filter (400) comprises three layers (401, 402, 403).

6. The method according to claim 5, wherein the first layer (401) of the multilayer ceramic foam filter (400) has a density in the range of 5-20 pores per inch (ppi), the second layer (402) has a density in the range of 21-40 ppi, and the third layer (403) has a density in the range of 41-60 ppi.
